# EUROPÄISCHE PATENTSCHRIFT

(11) **EP 1 079 064 B1**
(45) Veröffentlichungstag und Bekanntmachung des Hinweises auf die Patenterteilung: **16.04.2008**
(21) Anmeldenummer: 00117428.3
(22) Anmeldetag: 11.08.2000
(51) Int. Cl.: E21B 17/08, E21B 17/07, E21B 7/20, F16L 21/035

(54) **Druckausgleichsring für eine Verbindung zwischen Vortriebrohren**
Pressure equalizing ring for connections between drive-in pipes
Anneau d'équilibrage de pression pour connexion entre tubes destinés à être enfoncés

(30) Priorität: 11.08.1999 DE 19937344
(43) Veröffentlichungstag der Anmeldung: 28.02.2001
(73) Patentinhaber: Baumgartner, Franz, Dipl.-Ing., 78532 Tuttlingen (DE)
(72) Erfinder: Baumgartner, Franz, Dipl.-Ing., 78532 Tuttlingen (DE)
(74) Vertreter: Behrendt, Arne

(56) Entgegenhaltungen:
- EP-A- 0 306 796
- EP-A- 0 340 658
- EP-A- 0 340 659
- EP-A- 0 522 912
- EP-A- 0 640 744
- DE-A- 2 325 710
- DE-A- 2 505 980
- DE-A- 3 544 316
- DE-B- 1 079 091
- DE-U- 7 432 945
- DE-U- 29 614 582
- NL-C- 93 033

## Beschreibung

Die vorliegende Erfindung betrifft die Verwendung eines Druckausgleichsrings zur Einlage zwischen den Rohrstirnflächen beim unterirdischen Vortrieb von Rohren, insbesondere von Rohren aus relativ sprödem Material.

Bei der Verlegung von Rohrleitungen im Vorpreßverfahren wird aus einzelnen, aneinandergesetzten Vorpreßrohren eine Rohrleitung gebildet, die dadurch vorangetrieben wird, daß auf ihr hinteres Ende eine hohe axiale Vorpreßkraft ausgeübt wird. An den Rohrstößen werden die Rohrstirnflächen folglich aufeinander gepreßt. Um Beschädigungen aufgrund ungleichmäßiger Spannungsverteilungen vorzubeugen, muß insbesondere bei Rohren aus relativ spröden Materialien, z. B. Beton, Steinzeug und dergleichen, zwischen den Rohrstirnflächen, ein flacher, axialer Druckausgleichsring eingelegt werden, der häufig auch als Druckübertragungsring bezeichnet wird. Diese Druckausgleichsringe aus nachgiebigem Material gleichen punktuelle Spitzendrücke aus, beispielsweise aufgrund von Unebenheiten und Kantenpressungen bei axialen Abweichungen aus ungewollten und gewollten Auslenkungen, beispielsweise bei Kurvenpressungen.

Die Druckausgleichsringe müssen die gesamte axiale Vorpresskraft ohne Beschädigung aufnehmen können und dabei eine möglichst gleichmäßige Druckverteilung auf die Rohrenden bewirken. Im Stand der Technik ist man diesen Anforderungen bisher zumeist durch die Verwendung von Holzdruckausgleichsringen begegnet, die entweder vollständig, oder zumindest in den druckübertragenen Bereichen aus Holz bestehen. Eine derartige Ausführungsform ergibt sich beispielsweise aus der DE 296 14 582 U1. Der darin beschriebene Druckübertragungsring hat als eigentliches Druckübertragungselement einen aus Holzwerkstoff bestehenden Kernring, der in seinem radialen Außenbereich von einem Hüllring aus elastischem Material umgeben ist. Das im Vergleich zu Holzwerkstoff relativ weiche Elastomermaterial übernimmt dabei allerdings lediglich eine Dicht- und Anpassungfunktion an die Rohrwandung, und keine Druckübertragung.

Holzdruckausgleichsringe haben allerdings den prinzipiellen, materialbedingten Nachteil, daß sie beim Rohrvortrieb durch die wirkende Axialkraft relativ stark plastisch verformt werden und nur eine geringe elastische Rückfederung haben. Im bleibend zusammengepreßten Zustand, den das Holz bereits nach dem ersten Zusammenpressen einnimmt, wird der gewünschte Druckausgleich bzw. die gleichmäßige Druckverteilung nicht mehr erreicht.

Außerdem bringen Holzdruckausgleichsringe mit der Zeit eine erhöhte Verkeimungsgefahr mit sich. Durch abgelöste Holzpartikel und -fasern kommt es darüber hinaus zur Verunreinigung und unter Umständen zur Beschädigung von Armaturen, Behältern und sonstigen Aggregaten. Eine Kontrolle bzw. Nachbesserungen von eingebauten Holzdruckausgleichsringen ist insbesondere bei nicht begehbaren, d. h. kleinkalibrigen Leitungen nach der Verlegung nicht mehr durchführbar.

Aus der vorgenannten Problematik ergibt sich für die Erfindung die Aufgabenstellung, einen Druckausgleichsring anzugeben, der die Probleme der nach dem Stand der Technik bekannten Holzdruckausgleichsringe weitgehend vermeidet. Insbesondere wird dabei eine bessere Druckübertragung bei ungleichmäßiger Belastung angestrebt. Außerdem soll die hygienische und mechanische Stabilität verbessert werden.

Zur Lösung dieser Problematik schlägt die Erfindung vor, daß der Druckausgleichsring eine Mehrzahl von Druckübertragungselementen aus Elastomermaterial aufweist, die in einer Rohr-Axialebene jeweils mit Abstand zueinander angeordnet sind. DE 1 079 091 offenbart eine Fugeneinlage aus Ringschlauch zur Übertragung der Vortriebskraft zwischen zwei benachbarten Rohrschüssen.

Grundsätzlich sind zwar aus der EP 0 306 796 A1 Dichtungsprofile aus Elastomermaterial bekannt, die einzelne, voneinander durch Rillennuten getrennte Segmente aufweisen, die Verwendung als Druckausgleichsring beim Vortrieb von Rohren wird jedoch nicht erwährt.

Bei der erfindungsgemäßen Ausgestaltung sind die eigentlichen Druckübertragungselemente nicht wie bisher aus Holz, sondern aus einen dauerelastischen Material, beispielsweise einem synthetischen oder natürlichen Elastomer- oder Gummiwerkstoff gefertigt. Diese elastischen Materialien federn selbst nach starker Verformung wieder elastisch in ihre Ursprungsform zurück. Von besonderer Bedeutung für die Funktionsweise der Erfindung ist dabei, daß jeweils zwischen den Druckübertragungselementen Zwischenräume frei bleiben, welche das elastische Verhalten maßgeblich beeinflussen, wie im folgenden dargelegt wird.

Die verwendeten Gummi- bzw. Elastomerwerkstoffe sind inkompressibel, d. h. verhalten sich bei Druckbeanspruchung hydraulisch. Daher hat eine axiale Kompression eines Druckübertragungselements eine Querverformung in der Axialebene zur Folge. Die Druckübertragungselemente verhalten sich dabei in axialer Richtung federelastisch und werden zwischen den Rohrstirnflächen elastisch, d. h. reversibel verformt. Sobald jedoch für die Druckübertragungselemente in der Axialebene kein Ausweichraum mehr zur Verfügung steht, d. h. wenn die radial begrenzte Dichtfläche vollständig ausgefüllt ist, wird der Druckausgleichsring gegen weiteres Zusammenpressen in axialer Richtung inkompressibel. Es entsteht folglich eine kompakte Druckplatte, wie bei einem komprimierten Holzdruckausgleichsring. Übertragen auf die vorliegende Erfindung bedeutet dies, daß der Druckausgleichsring so weit axial zusammengepreßt werden kann, bis die Abstände bzw. Zwischenräume zwischen den einzelnen Druckübertragungselementen durch die auftretende Querverformung vollständig mit elastischem Material gefüllt sind. Wird die Anpreßkraft darüber hinaus erhöht, erfolgt keine weitere elastische Axialverformung mehr, sondern die über eine Rohrstirnfläche eingeleitete Vorpreßkraft wird hydraulisch unmittelbar auf die gegenüberliegende Rohrstirnfläche übertragen.

Ein besonderer Vorteil der erfindungsgemäßen Ausgestaltung besteht darin, daß durch die zunächst federelastische Verformung der Druckübertragungselemente der Anpreßdruck besonders gleichmäßig in die Rohrstirnflächen, d. h. Stirndruckflächen eingeleitet wird, und zwar selbst bei Unebenheiten im Rohrspiegel oder punktueller Belastung bei Kurvenpressung, wenn der Muffenspalt am Rohrstoß auf der Außenseite der Kurve größer ist als innen. Die Rückfederung aufgrund ihres federelastischen Verhaltens sorgt in dieser Situation dafür, daß die Druckübertragungselemente sich im erweiterten Muffenspalt wieder axial ausdehnen und gleichzeitig durch diese elastische Druckübertragung den Anpreßdruck in Richtung der Leitungsbogen-Innenseite verstärken.

Die federelastischen Eigenschaften bleiben in vorteilhafter Weise selbst nach vielfacher Verformung durch Be- und Entlastung weitgehend erhalten. Durch das inkompressible Verhalten im vollkommen zusammengepreßten Zustand, d. h. bei Vollpressung, steigt die Federkennlinie überproportional, d. h. progressiv an, da die einzelnen Druckausgleichselemente in der vorangehend erläuterten Weise zu einem geschlossenen Flanschring planparallel zusammengepreßt sind und sich wie eine kompakte Druckplatte verhalten. In diesem Zustand wirkt die Vorpreßkraft bis zum Erreichen der mechanischen Materialzerstörung, und zwar des Rohrendes oder des Elastomermaterials.

Durch das geschilderte federelastische und elastohydraulische Verhalten ist durch den erfindungsgemäßen Druckausgleichsring eine optimale, reversible Druckverteilung sowohl während des Rohrleitungsvortriebs, als auch bei späteren Leitungsbewegungen gewährleistet, welche durch Bergschäden oder sonstige Bewegungen des Untergrunds hervorgerufen werden können.

Es ist weiterhin vorteilhaft, daß die verwendeten Elastomerwerkstoffe hohen hygienischen Anforderungen genügen, beispielsweise bei Trink- und Prozeßwasserleitungen. Eine mechanische Beeinträchtigung, beispielsweise durch abgelöste und in den Leitungsquerschnitt gelangende Partikel und dergleichen ist ebenfalls nicht zu erwarten.

Die Druckübertragungselemente bekommen vorzugsweise parallele axiale Druckflächen, d. h. sind im Querschnitt rechteckförmig oder parallel geflacht ausgebildet. Dadurch können sie definiert zwischen den stirnseitigen Druckflächen der Vorpreßrohre eingebaut werden und bilden eine dauerhaft elastische Zwischenlage.

Die Formgebung der Druckausgleichselemente in der axialen Rohrebene unterliegt im Prinzip keinen Einschränkungen. Besonders günstig ist es jedoch, daß die Druckübertragungselemente als Elastomer-Lamellen ausgebildet sind, und zwar entweder radial-fächerförmig verlaufend, oder in Umfangsrichtung umlaufend. Die Zwischenräume zwischen diesen Lamellen verlaufen entsprechend ebenfalls radial-strahlenförmig oder in Umfangsrichtung umlaufend.

Die in Umfangsrichtung umlaufenden Elastomer-Lamellen haben den besonderen Vorteil, daß sie aufgrund ihrer elastischen Eigenschaften zugleich eine Abdichtung des Muffenspalts bewirken. Dies kann insbesondere bei Trink- und Prozeßwasserleitungen oder für sonstige Sonderanwendungen von Bedeutung sein.

Unabhängig davon, ob die Elastomer-Lamellen ring-, strahlenförmig oder abweichend davon angeordnet sind, können sie optimal dadurch an die zu erwartenden Belastungen angepaßt werden, daß im Elastomerquerschnitt eine Bewehrung eingebettet ist. Durch diese Bewehrung, die vorzugsweise als Faserbewehrung aus Glas-, Stahl- oder Textilfaser, wie etwa Baumwollgewebe, ausgebildet ist, kann die Zugfestigkeit längs und/oder quer im geforderten Maße erhöht werden. Auf diese Weise ist eine funktionale Anpassung an jegliche Anwendungsfälle problemlos möglich.

Vorzugsweise sind die Elastomer-Lamellen durch Stege miteinander verbunden. Dadurch bildet ein erfindungsgemäßer Druckausgleichsring eine Montageeinheit, die besonders rationell im Rohrstoß montierbar ist.

Die Druckübertragungselemente können zwischen axialen Trägerplatten fixiert werden, welche als Gleitplatten mit niedrigen Reibungswerten ausgebildet sind. Durch die geringe Reibung zwischen den Druckübertragungselementen und den Trägerplatten ist gewährleistet, daß die elastische Verformung der Druckübertragungselemten bei axialer Belastung linear und über lange Zeit reproduzierbar erfolgt.

Es ist ebenfalls denkbar, daß die Druckübertragungselemente auf einer Rohrstirnfläche befestigt sind. Dadurch besteht die Möglichkeit, daß beispielsweise Elastomer-Lamellen bereits vom Werk aus einseitig auf der stirnseitigen Druckfläche eines Vorpreßrohrs angebracht, beispielsweise unlösbar aufgeklebt werden. Die Montagefreundlichkeit wird dadurch erhöht.

Eine vorteilhafte Weiterbildung der Erfindung sieht vor, daß eine Mehrzahl von erfindungsgemäßen Druckübertragungselementen in einem Elastomerschlauch angeordnet ist. Diese sind dabei vorzugsweise selbstschmierend ausgebildet. Durch die gekapselte Anordnung in dem vorzugsweise geschlossenen Elastomerschlauch werden Verunreinigungen vermieden und somit eine praktisch reibungsfreie Federfunktion über einen längeren Betriebszeitraum gewährleistet.

Ausführungsbeispiele der Erfindung werden im folgenden anhand der Zeichnungen näher erläutert. Diese zeigen im einzelnen:
- Fig. 1:: einen Druckausgleichsring in einer ersten Ausführungsform in axialer Ansicht;
- Fig. 2:: einen Druckausgleichsring in einer zweiten Ausführungsform in axialer Ansicht;
- Fig. 3:: eine Schnittansicht eines Druckausgleichsrings gemäß Fig. 2 in teilweiser Pressung bei axialer Rohrausrichtung;
- Fig. 4:: eine Ansicht wie in Fig. 3 bei Vollpressung;
- Fig. 5:: eine Schnittansicht wie in Fig. 3, bei ausgelenkter Rohrausrichtung;
- Fig. 6:: eine Schnittansicht wie in Fig. 5, bei Vollpressung;
- Fig. 7:: eine Schnittansicht eines Rohrstoßes mit einem Druckausgleichsring in einer dritten Ausführungsform;
- Fig. 8:: eine Schnittansicht wie in Fig. 7 mit einem Druckausgleichsring in einer vierten Ausführungsform;
- Fig. 9:: eine Schnittansicht wie in Fig. 7 mit einem Druckausgleichsring in einer fünften Ausführungsform;
- Fig. 10:: eine Schnittansicht wie in Fig. 7 mit einem Druckausgleichsring in einer sechsten Ausführungsform.

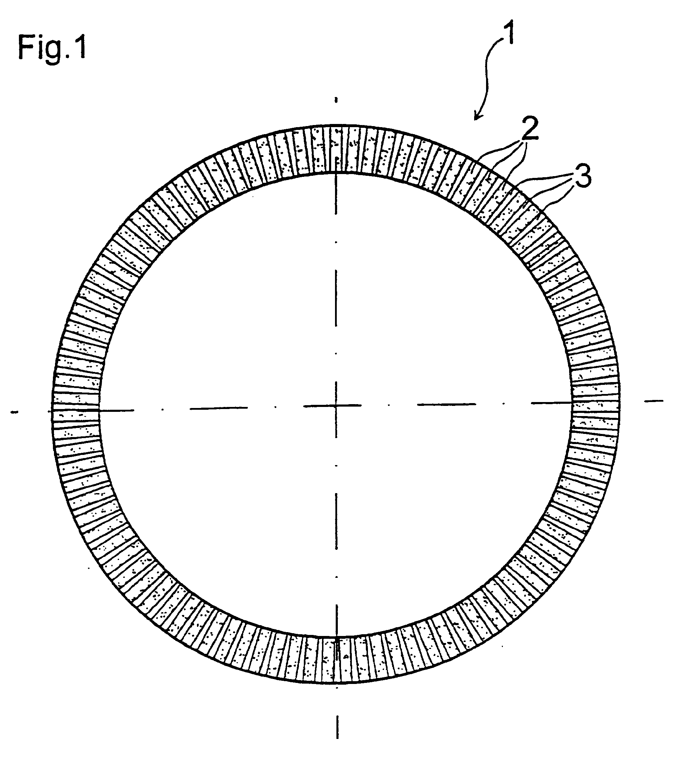

Fig. 1 zeigt eine axiale Ansicht eines Druckausgleichsrings gemäß der Erfindung, der darin als Ganzes mit dem Bezugszeichen 1 versehen ist und eine Vielzahl von radial-, fächer- bzw. strahlenförmig angeordneten, aus der Bildebene hervortretenden Elastomer-Lamellen 2 aufweist. Zwischen den Lamellen befinden sich Zwischenräume 3.

In den nachfolgenden Zeichnungen werden dieselben Bezugszeichen verwendet, soweit sie funktionsidentische Bestandteile betreffen.

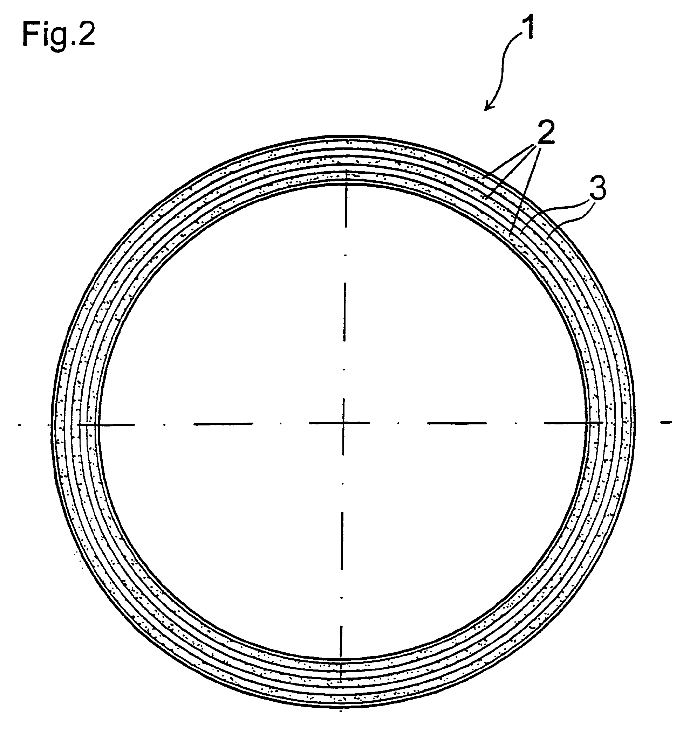

Fig. 2 zeigt eine weitere Ausführungsform eines Druckausgleichsrings 1 in derselben Ansicht wie in Fig. 1. Im Gegensatz dazu verlaufen die Elastomer-Lamellen 2 darin in Form von konzentrischen Ringen, zwischen denen - ebenfalls konzentrisch - die Zwischenräume 3 verlaufen.

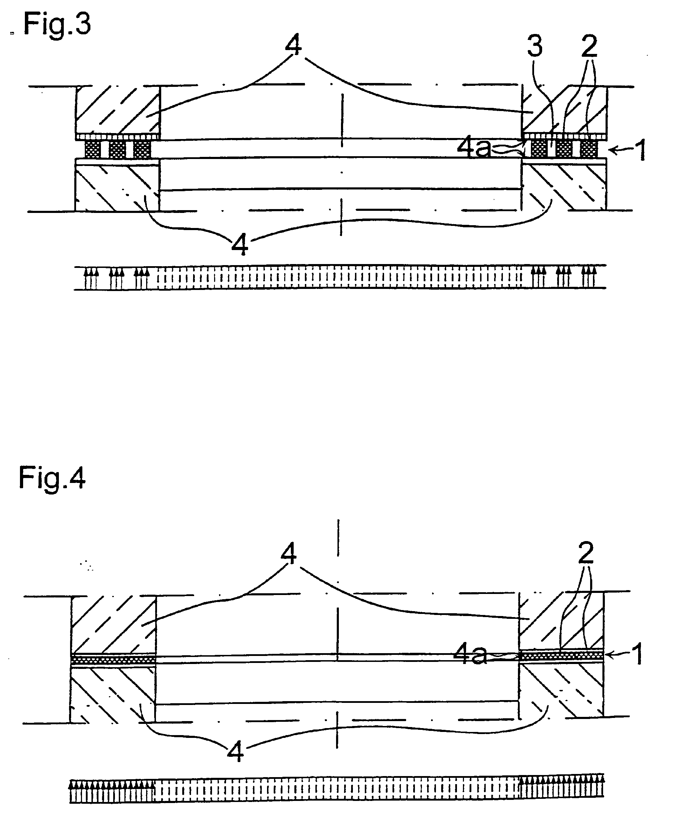

Fig. 3 und Fig. 4 zeigen einen Längsschnitt durch einen Rohrstoß, bei dem die Enden zweier aneinanderstoßender Vorpreßrohre 4 dargestellt sind, zwischen deren stirnseitigen Druckflächen 4a schematisch ein Druckausgleichsring 1 gemäß Fig. 2 dargestellt ist. Dieser weist als Elastomerelemente 3 konzentrisch angeordnete Elastomer-Lamellen 2 mit rechteckigem Querschnitt auf, zwischen denen die Zwischenräume 3 mit ebenfalls rechteckigem Querschnitt liegen. Die Rohre 4 fluchten in Fig. 3 und Fig. 4 axial. Während in Fig. 3 die Druckflächen 4a nur teilweise axial zusammengepreßt sind, d. h. die Elastomer-Lamellen 2 elastisch verformt werden, zeigt Fig. 4 eine Ansicht bei Vollpressung, d. h. durch ihre Querverformung - In radialer Richtung - haben die Elastomer-Lamellen 2 die Zwischenräume 3 vollständig ausgefüllt, so daß - eine hier nicht dargestellte radiale Begrenzung vorausgesetzt - eine unmittelbare, hydraulische Kraftübertragung zwischen den Druckflächen 4a der Rohre 4 erfolgt. Eine weitere Erhöhung der Vorpreßkraft in dieser Situation würde nicht zu einer weiteren Verformung des Druckausgfeichsrings 1, sondern allenfalls zu einer Zerstörung der Rohre 4 bzw. einem irreversiblen Zerquetschen der Elastomer-Lamellen 2 führen.

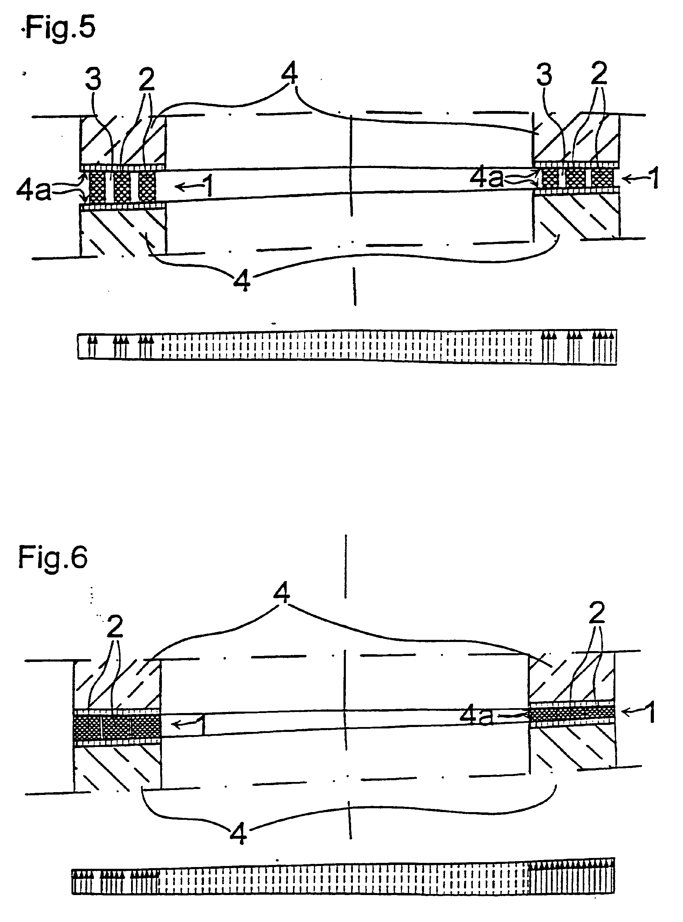

Die Abbildungen in Fig. 5 und Fig. 6 zeigen ähnliche Ansichten wie in Fig. 3 und in Fig. 4, wobei im Unterschied dazu die Rohre 4 gegenüber der axialen Rohrausrichtung ausgelenkt, d. h. leicht gegeneinander verkippt sind, so daß der Muffenspalt sich in der Zeichnung von rechts nach links erweitert.

In Fig. 3 und 4 sowie in Fig. 5 und 6 ist unterhalb der zeichnerischen Darstellung jeweils die Spannungsverteilung angedeutet. Darin ist deutlich die gleichmäßige Spannungsverteilung bei axialer Rohrausrichtung erkennbar, die bei Vollpressung wie in Fig. 4 deutlich höher ist als in Teilpressung gemäß Fig. 3. Bei der in Fig. 5 dargestellten Kurvenpressung wird deutlich, daß die Elastomer-Lamellen 2 aufgrund ihrer elastischen Eigenschaften auf der Leitungsbogen-Innenseite einen erhöhten Anpreßdruck ausüben. Die Unterschiede in der Spannungsverteilung liegen bei der in Fig. 6 dargestellten Vollast ebenfalls vor. Während auf der Leitungsbogen-Innenseite (rechts) bereits die Vollpressung wie in Fig. 4 erreicht ist, arbeiten die Elastomer-Lamellen 2 auf der Leitungsbogen-Außenseite (links) noch im federelastischen Bereich.

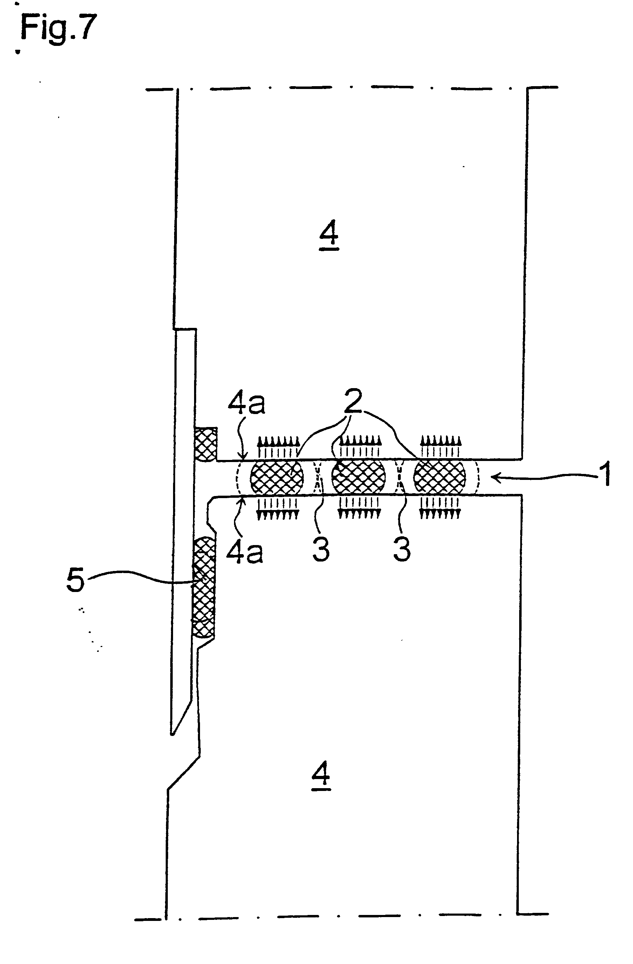

Fig. 7 zeigt ebenfalls einen Rohrstoß in Teilansicht, wobei der erfindungsgemäße Druckausgleichsring 1 ausgebildet ist ähnlich der Ausführung gemäß Fig. 2. Dabei haben die Elastomer-Lamellen einen parallel geflachten Kreisquerschnitt. Mit der Kreuzschraffur sind die Elastomer-Lamellen in teilweiser Verpressung dargestellt. Mit den gestrichelten Außenlinien ist die radiale Querausdehnung eingezeichnet, bei welcher die Elastomer-Lamellen 2 die Zwischenräume 3 vollständig ausfüllen.

Zusätzlich ist hier eine Primärdichtung 5 eingezeichnet.

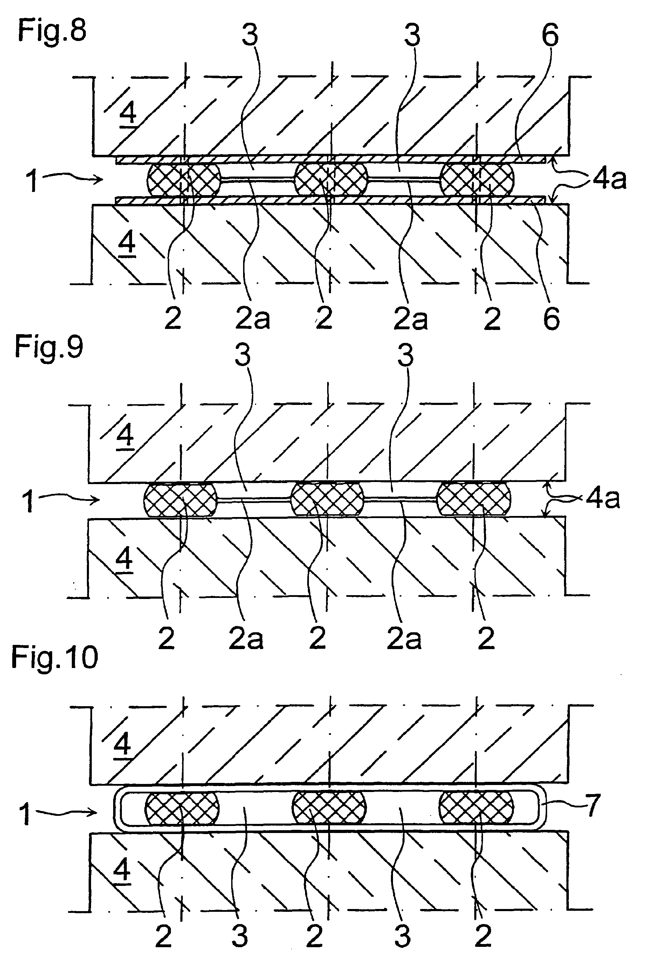

Fig. 8 zeigt in einer ähnlichen Ansicht wie Fig. 7 einen Druckausgleichsring 1, dessen in Umfangsrichtung verlaufende Elastomer-Lamellen 2 durch schmale Stege 2a miteinander verbunden sind. Der Druckausgleichsring ist dabei zwischen zwei auf den Stirnseiten 4a der Rohre 4 liegenden Träger- bzw. Gleitplatten 6 angeordnet, welche zu den Elastomer-Lamellen 2 niedrige Reibungswerte haben.

Fig. 9 zeigt eine weitere Ausführungsform eines erfindungsgemäßen Druckausgleichsrings 1, dessen Elastomer-Lamellen 2 ebenfalls - wie in Fig. 8 über Stege 2 miteinander verbunden sind. Im Unterschied dazu sind die Elastomer-Lamellen 2 jedoch fest mit der Druckfläche 4a des in der Zeichnung obenliegenden Rohres 4 verklebt.

Fig. 10 zeigt eine weitere Ausführungsform eines erfindungsgemäßen Druckausgleichsrings 4, wobei die Elastomer-Lamellen 2 unter Belassung von Zwischenräumen 3 in einem Elastomer-Schlauch 7 gekapselt untergebracht sind. Vorzugsweise befindet sich in dem Elastomerschlauch 7 ein Dauer-Schmierstoff bzw. sind die Elastomer-Lamellen selbstschmierend ausgestaltet.

Bei sämtlichen dargestellten Ausführungsformen wird durch die Ausgestaltung des Druckausgleichsrings 1 mit den Elastomer-Lamellen 2 im Abstand der Zwischenräume 3 ein vorteilhaftes, federelastisches und elastohydraulisches Verhalten gemäß der Erfindung erreicht, wie dies vorangehend bereits ausführlich erläutert worden ist. Die Nachteile von Holzdruckausgleichsringen nach dem Stand der Technik werden damit vermieden.

## Patentansprüche

1. Verwendung eines Druckausgleichsrings zur Einlage zwischen den Rohrstirnflächen(4a) beim unterirdischen Vortrieb von Rohren (4), insbesondere von Rohren (4) aus relativ sprödem Material, **dadurch gekennzeichnet, daß** der Druckausgleichsring (1) eine Mehrzahl von Druckübertragungselementen (2) aus Elastomermaterial aufweist, die in einer Rohr-Axialebene jeweils mit Abstand (3) zueinander angeordnet sind, wobei jeweils zwischen den Druckübertragungselementen (2) Zwischenräume (3) frei bleiben und wobei der Druckausgleichsring (1) so weit zusammenpressbar ist, bis die Zwischenräume (3) zwischen den Druckübertragungselementen (2) vollständig mit dem Elastomermaterial gefüllt sind.

2. Verwendung eines Druckausgleichsrings nach Anspruch 1, **dadurch gekennzeichnet, daß** die Druckübertragungselemente (4) parallele axiale Druckflächen haben.

3. Verwendung eines Druckausgleichsrings nach Anspruch 1, **dadurch gekennzeichnet, daß** die Druckübertragungselemente (2) als in Umfangsrichtung umlaufende Elastomer-Lamellen (2) ausgebildet sind.

4. Verwendung eines Druckausgleichsrings nach Anspruch 1, **dadurch gekennzeichnet, daß** die Druckübertragungselemente (2) als radial-fächerförmig verlaufende Elastomer-Lamellen (2) ausgebildet sind.

5. Verwendung eines Druckausgleichsrings nach Anspruch 1, **dadurch gekennzeichnet, daß** die Druckübertragungselemente (2) durch Stege (2a) miteinander verbunden sind.

6. Verwendung eines Druckausgleichsrings nach Anspruch 1, **dadurch gekennzeichnet, daß** im Elastomerquerschnitt eine Bewehrung eingebettet ist.

7. Verwendung eines Druckausgleichsrings nach Anspruch 6, **dadurch gekennzeichnet, daß** die Bewehrung eine Faserbewehrung ist.

8. Verwendung eines Druckausgleichsrings nach Anspruch 1, **dadurch gekennzeichnet, daß** die Druckübertragungselemente (2) zwischen axialen Trägerplatten (6) fixiert werden.

9. Verwendung eines Druckausgleichsrings nach Anspruch 8, **dadurch gekennzeichnet, daß** die Trägerplatten (6) als Gleitplatten mit niedrigen Reibungswerten ausgebildet sind.

10. Verwendung eines Druckausgleichsrings nach Anspruch 1, **dadurch gekennzeichnet, daß** die Druckübertragungselemente (2) auf einer Rohrstirnfläche (4a) befestigt sind.

11. Verwendung eines Druckausgleichsrings nach Anspruch 1, **dadurch gekennzeichnet, daß** eine Mehrzahl von Druckübertragungselementen (2) in einem Elastomerschlauch (7) angeordnet ist.

12. Verwendung eines Druckausgleichsrings nach Anspruch 11, **dadurch gekennzeichnet, daß** die Druckübertragungselemente (2) in dem Elastomerschlauch (7) selbstschmierend ausgebildet sind.

## Claims

1. Use of a pressure equalisation ring for insertion between the pipe end faces (4a) in the underground advance of pipes (4), in particular pipes (4) of relatively brittle material, **characterised in that** the pressure equalisation ring (1) has a multiplicity of pressure transmitting elements (2) of elastomer material which are respectively arranged at a spacing (3) relative to each other in an axial plane of the pipe, wherein intermediate spaces (3) respectively remain free between the pressure transmitting elements (2) and wherein the pressure equalisation ring (1) is compressible until the intermediate spaces (3) between the pressure transmitting elements (2) are completely filled with the elastomer material.

2. Use of a pressure equalisation ring according to claim 1 **characterised in that** the pressure transmitting elements (4) have parallel axial pressure surfaces.

3. Use of a pressure equalisation ring according to claim 1 **characterised in that** the pressure transmitting elements (2) are in the form of elastomer plates (2) extending in the peripheral direction.

4. Use of a pressure equalisation ring according to claim 1 **characterised in that** the pressure transmitting elements (2) are in the form of elastomer plates (2) extending in a radial fan-shaped configuration.

5. Use of a pressure equalisation ring according to claim 1 **characterised in that** the pressure transmitting elements (2) are connected together by arms (2a).

6. Use of a pressure equalisation ring according to claim 1 **characterised in that** a reinforcement is embedded in the elastomer cross-section.

7. Use of a pressure equalisation ring according to claim 6 **characterised in that** the reinforcement is a fibre reinforcement.

8. Use of a pressure equalisation ring according to claim 1 **characterised in that** the pressure transmitting elements (2) are fixed between axial carrier plates (6).

9. Use of a pressure equalisation ring according to claim 8 **characterised in that** the carrier plates (6) are in the form of sliding plates of low frictional values.

10. Use of a pressure equalisation ring according to claim 1 **characterised in that** the pressure transmitting elements (2) are fixed on a pipe end face (4a).

11. Use of a pressure equalisation ring according to claim 1 **characterised in that** a multiplicity of pressure transmitting elements (2) is arranged in an elastomer tube (7).

12. Use of a pressure equalisation ring according to claim 11 **characterised in that** the pressure transmitting elements (2) are of a self-lubricating nature in the elastomer tube (7).

## Revendications

1. Utilisation d'un anneau d'équilibrage de pression pour l'insertion entre les faces frontales de tube (4a) lors de la poussée souterraine de tubes (4), en particulier de tubes (4) en un matériau relativement cassant, **caractérisée en ce que** l'anneau d'équilibrage de pression (1) présente une multitude d'éléments de transmission de pression (2) en matériau élastomère qui sont disposés dans un plan axial de tube à chaque fois avec un écart (3) entre eux, où à chaque fois entre les éléments de transmission de pression (2), des espaces intermédiaires (3) restent libres, et où l'anneau d'équilibrage de pression (1) peut être comprimé jusqu'à ce que les espaces intermédiaires (3) entre les éléments de transmission de pression (2) soient remplis complètement de matériau d'élastomère.

2. Utilisation d'un anneau d'équilibrage de pression selon la revendication 1, **caractérisée en ce que** les éléments de transmission de pression (4) ont des faces de pression axiales parallèles.

3. Utilisation d'un anneau d'équilibrage de pression selon la revendication 1, **caractérisé en ce que** les éléments de transmission de pression (2) sont réalisés sous forme de lamelles élastomères (2) s'étendant dans la direction périphérique.

4. Utilisation d'un anneau d'équilibrage de pression selon la revendication 1, **caractérisée en ce que** les éléments de transmission de pression (2) sont réalisés comme des lamelles élastomères (2) s'étendant radialement en forme d'éventail.

5. Utilisation d'un anneau d'équilibrage de pression selon la revendication 1, **caractérisée en ce que** les éléments de transmission de pression (2) sont reliés par des nervures (2a).

6. Utilisation d'un anneau d'équilibrage de pression selon la revendication 1, **caractérisée en ce qu'**une armature est noyée dans la section transversale de l'élastomère.

7. Utilisation d'un anneau d'équilibrage de pression selon la revendication 6, **caractérisée en ce que** l'armature est une armature de fibres.

8. Utilisation d'un anneau d'équilibrage de pression selon la revendication 1, **caractérisée en ce que** les éléments de transmission de pression (2) sont fixés entre des plaques de support axiales (6).

9. Utilisation d'un anneau d'équilibrage de pression selon la revendication 8, **caractérisé en ce que** les plaques de support (6) sont réalisées comme des plaques de coulissement avec des valeurs de friction basses.

10. Utilisation d'un anneau d'équilibrage de pression selon la revendication 1, **caractérisé en ce que** les éléments de transmission de pression (2) sont fixés sur une face frontale de tube (4a).

11. Utilisation d'un anneau d'équilibrage de pression selon la revendication 1, **caractérisée en ce qu'**une multitude d'éléments de transmission de pression (2) est disposée dans une gaine en élastomère (7).

12. Utilisation d'un anneau d'équilibrage de pression selon la revendication 11, **caractérisée en ce que** les éléments de transmission de pression (2) dans la gaine en élastomère (7) sont réalisés d'une manière autolubrifiante.
